Europäisches Patentamt

European Patent Office

Office européen des brevets

(11) Veröffentlichungsnummer: **0 391 157**
**A2**

## (12) EUROPÄISCHE PATENTANMELDUNG

(21) Anmeldenummer: **90105458.5**

(22) Anmeldetag: **22.03.90**

(51) Int. Cl.⁵: **G06F 13/42**

(30) Priorität: **03.04.89 DE 3910719**

(43) Veröffentlichungstag der Anmeldung:
**10.10.90 Patentblatt 90/41**

(84) Benannte Vertragsstaaten:
**AT BE CH DE FR GB IT LI SE**

(71) Anmelder: **Siemens Aktiengesellschaft**
**Wittelsbacherplatz 2**
**D-8000 München 2(DE)**

(72) Erfinder: **Flach, Werner, Dipl.-Ing.**
**Pfistermeisterstrasse 47**
**D-8450 Amberg(DE)**

(54) Schnittstellenmodul.

(57) Zur Übergabe von Daten zwischen einem Bus (1) und einer Verarbeitungseinheit (2) sind bisher nur feste Schnittstellen bekannt. Dabei ist das Problem, daß die Verarbeitungseinheiten (2) mit sehr unterschiedlichen HOST-Mikroprozessoren (6) betrieben werden können, was eine entsprechende Anpassung erfordert. Daher soll eine anpaßbare, vom HOST-Mikroprozessor (6) kontrollierte HOST-Schnittstelle (3) zwischen einem Bus (1) und einem beliebigen HOST-Mikroprozessor (6) geschaffen werden. Hierzu dient ein Schnittstellenmodul (4) mit einem Mikroprozessor (5), der über ein Programm den Datenaustausch zwischen dem Bus (1) und der Verarbeitungseinheit (2) steuert.

Das Anwendungsgebiet umfaßt jegliche Art von Busankopplungen an Geräte, wie z.B. speicherprogrammierbare Steuerungen.

## Schnittstellenmodul

Die Erfindung betrifft eine Anordnung zum Verbinden einer Verarbeitungseinheit mit einem Bus über eine Schnittstelle.

Bisher sind zur Übergabe von Daten zwischen einem Bus und einer Verarbeitungseinheit feste Schnittstellen bekannt, die wahlweise parallel oder seriell sein können. Dabei ist es notwendig, daß die Verarbeitungseinheit zum Austausch von Daten mit dem Bus ein auf den Busbetrieb zugeschnittenes Anpassungsteil aufweist. Ein solches Anpaßteil ist, abhängig von dem in der Verarbeitungseinheit verwendeten HOST-Mikroprozessor, unterschiedlich ausgeführt. Die hierzu erforderliche Bereitstellung verschiedener Anpaßteile für die unterschiedlichen Verarbeitungseinheiten ist kostenaufwendig. Der Erfindung liegt daher die Aufgabe zugrunde, eine anpaßbare Schnittstelle zwischen einem Datenbus und einer Verarbeitungseinheit zu schaffen. Diese Aufgabe wird dadurch gelöst, daß die Schnittstelle als Schnittstellenmodul ausgebildet, einen Mikroprozessor, eine Busschnittstelle zum Anschluß an einen Bus und eine HOST-Schnittstelle zur Verbindung mit einer Verarbeitungseinheit aufweist und daß für den Betrieb des Mikroprozessors ein Programm vorgesehen ist, das einen Datenaustausch zwischen dem Bus und dem Schnittstellenmodul sowie der Verarbeitungseinheit ermöglicht.

Ein solches Schnittstellenmodul kann mit kleinen Abmessungen gefertigt werden und ist universell anwendbar.

Ist das Schnittstellenmodul als steckbare Einheit ausgeführt, so kann es leicht angeschlossen und ausgewechselt werden.

Ist die HOST-Schnittstelle des Schnittstellenmoduls eine Parallelschnittstelle, und ist auf dem Schnittstellenmodul ein parametrierbarer, erster, anwenderspezifischer Schaltkreis vorgesehen, der die Anpassung des Datenaustauschs zwischen dem dem Mikroprozessor und dem HOST-Mikroprozessor der Verarbeitungseinheit an das Schreib-Lese-Verhalten des letzteren vornimmt, so ist hiermit ein Datenaustausch zwischen dem Schnittstellenmodul und dem eine Parallelschnittstelle aufweisenden HOST-Mikroprozessor möglich. Dadurch, daß der anwenderspezifische Schaltkreis mehrere Betriebsmodi bereitstellt, ist beispielsweise eine Maximierung der Datenübertragungsgeschwindigkeit möglich. Es erweist sich als vorteilhaft, wenn die Parametrierung über Eingabe eines ersten Codes in das Programm des Mikroprozessors erfolgt. Da manche HOST-Mikroprozessoren über eine serielle HOST-Schnittstelle verfügen, ist es vorteilhaft, wenn das Schnittstellenmodul daran mit entsprechend wenigen Verbindungen betrieben werden kann, was sich kostensenkend auswirkt. Weist die HOST-Schnittstelle des Schnittstellenmoduls sowohl einen seriellen als auch einen parallelen Übergabeteil auf, so kann wahlweise je nach vorhandener Schnittstelle des HOST-Mikroprozessors zu diesem die Verbindung durchgeführt werden. Um hinsichtlich des Betriebes mit Bussen, die verschiedene Busprotokolle haben, flexibel zu sein, ist es günstig, wenn über die Eingabe eines zweiten Codes in das Programm des Mikroprozessors der Datenaustausch zwischen diesem und dem Bus, der mit verschiedenen Bussen betrieben ist, anpaßbar ist.

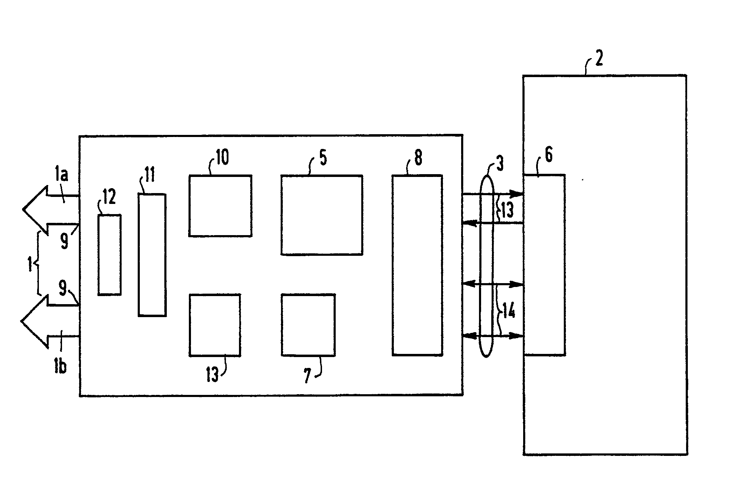

In der Zeichnung ist ein Ausführungsbeispiel der Erfindung dargestellt, das im folgenden näher beschrieben ist.

Sie zeigt einen Schnittstellenmodul 4, der zur Anpassung eines normierten Busses 1, der maximal zwei Buslinien 1a, 1b aufweist, an einen HOST-Mikroprozessor 6 einer Verarbeitungseinheit 2 dient. Der normierte Bus 1 weist ein Busprotokoll auf, das im Schnittstellenmodul 4 verarbeitet wird. Der HOST-Mikroprozessor 6 weist je nach Typ als HOST-Schnittstelle 3 eine parallele 14 und/oder eine serielle 13 auf. Weiterhin kann der HOST-Mikroprozessor 6 ein recht unterschiedliches Schreib-Lese- Verhalten besitzen, an das ebenfalls eine Anpassung durch das Schnittstellenmodul 4 erforderlich ist.

Zur Übertragung der vom Mikroprozessor 5 vom Bus 1 her aufgenommenen Daten über eine parallele HOST-Schnittstelle 14 an den HOST-Mikroprozessor 6 ist das Schnittstellenmodul 4 mit einem Speicher 7 und einem ersten anwenderspezifischen Schaltkreis 8 versehen. Die Daten werden nach Aufnahme im Mikroprozessor 5 im Speicher 7 gespeichert. Der Zugriff auf die Daten im Speicher 7 muß entsprechend dem Schreib-Lese-Verhalten des jeweiligen HOST-Mikroprozessors 6 gesteuert werden, wofür der anwenderspezifische Schaltkreis 8 dient. Der anwenderspezifische Schaltkreis 8 unterstützt demzufolge den Datenaustausch zwischen dem Mikroprozessor 5 und dem HOST-Mikroprozessor 6. Eine Anpassung an unterschiedliches Schreib-Lese-Verhalten der verschiedenen Typen von HOST-Mikroprozessoren 6, z.B. hinsichtlich der Quittierung und der Architektur (z.B. 8 Bit oder 16 Bit) geschieht durch eine Parametrierung des Schnittstellenmoduls 4. Die Parametrierung besteht darin, daß dem Mikroprozessor 5 über sein Programm ein erster Code eingegeben wird, wodurch auf bestimmte Daten zurückgegriffen wird, die das Schreib- und Leseverhalten des jeweiligen HOST-Mikroprozessors 6 betreffen und die im Mikroprozessor 5 gespeichert sind. Parallele HOST-Schnittstellen 14 sind meist recht breit und weisen eine dem HOST-Mikroprozessor 6 entsprechende Anzahl von Daten- und Adreßleitungen auf.

Für den Fall, daß der HOST-Mikroprozessor 6 eine serielle Schnittstelle 13 hat, kann im Schnittstellenmodul 4 auf den anwenderspezifischen Schaltkreis 8 verzichtet werden. Die Anpassung für die serielle Schnittstelle 13 erfolgt dann im wesentlichen durch den Mikroprozessor 5 mit Hilfe entsprechender Firmware.

Im Vergleich zum Schnittstellenmodul 4 mit paralleler HOST-Schnittstelle 13 läßt sich der Kostenaufwand beim Schnittstel enmodul 4 mit serieller HOST-Schnittstelle 13 erheblich reduzieren, da hier nur wenige Verbindungen erforderlich sind.

Von der obigen Voraussetzung abweichend, daß der Bus 1 normiert ist, d.h. daß er mit einem bestimmen Busprotokoll betrieben wird, ist auch ein Betrieb mit verschiedenen Bussen 1 denkbar, die mit unterschiedlichen Busprotokollen arbeiten. Hierfür ist es möglich, im Programm des Mikroprozessors 5 den Busprotokollen entsprechende Bear-beitungsroutinen vorzusehen, die den Datenaus-tausch zwischen dem Mikroprozessor 5 und dem Bus 1 ermöglichen und die durch Eingabe eines zweiten Codes in das Programm vorwählbar sind.

Die Schnittstellenmodule werden vorteilhafterweise mit Steckanschlüssen versehen, so daß die elektrischen Verbindungen auch leicht wieder lösbar sind und damit auch ein Auswechseln des Schnittstellenmoduls 4 ohne großen Aufwand möglich ist. Die universelle Anwendbarkeit und mögliche Ausführung in kleinen Abmessungen stellen wesentliche Vorteile solcher Schnittstellenmodule dar.

Das Schnittstellenmodul 4 bietet über seine serielle HOST-Schnittstelle 13 eine parametrierbare asynchrone UART-Schnittstelle (Universal Asynchron Receive Transmit) an.

Die parallele HOST-Schnittstelle arbeitet nach dem Hold/Hold-acknowledge-Prinzip (HLD/HLDA). Das Schnittstellenmodul 4 meldet mit HOLD den Wunsch zur Kommunikation mit dem HOST-Prozessor 6 an. Das Schnittstellenmodul 4 kann prinzipiell beliebig lange warten. Die Bus-Schnittstelle 9 und die HOST-Schnittstelle 3 sind somit zeitlich entkoppelt. Wird die HOST-Schnittstelle 14 mit HOLDACKNOWLEDGE zugeteilt, wird ein Buszugriff getätigt. Der HOST-Mikroprozessor 6 hat die volle Kontrolle über die HOST-Schnittstelle 3 und kann mit der Verweigerung des HLDA-Signals den Schnittstellenmodul 4 blockieren.

Der anwenderspezifische Baustein 8 bietet drei Betriebsmodi an. Hierzu gehört erstens ein völlig autonom laufender Blocktransfer (DMA) aus dem Speicher 7 zur HOST 6. Im zweiten Betriebsmodus (STM = Single Transfer Modus) kann jede beliebige Memoryadresse im HOST-Mikroprozessor 6 angesprochen werden. Drittens kann zur Ausübung des Semaphore-Modus (SEM) automatisch ein Speicherbereich reserviert werden. Der HOST-Zugriff kann parametrierbar auch unter Lock erfolgen, d.h. die HOST-Schnittstelle 3 wird über längere Zeit reserviert.

Die HOST-Schnittstelle 3 gestattet parametrierbar einen Byte-oder Wort-Betrieb (16 Bit). Ein Eingang des Schnittstellenmoduls 4 schaltet in den Transparent-Modus, d.h. das Schnittstellenmodul 4 ist als Einprozessorsystem mit extern verfügbaren Adreß- und Datenbus einsetzbar.

Die parallele Schnittstelle 14 ermöglicht einen hohen Datendurchsatz. Das Programm für den Mikroprozessor 5 ist in ihm selbst oder in einem Speicher 13 abgelegt und steuert nach Eingabe eines zweiten Codes die Bus-Schnittstelle 9. Durch den variablen zweiten Code kann das Schnittstellen-Modul 4 unterschiedliche serielle Datenprotokolle verarbeiten.

Ein anwenderspezifischer Baustein 10 gestattet die Einstellung variabler Baudraten, die Steuerung von Einkanal- oder Zweikanal-Betrieb. Im Zweikanal-Betrieb lassen sich ein redundantes System verwirklichen oder zwei Bus-Schnittstellen 9 mit unterschiedlichen Baudraten bedienen. Eine eingebaute Sendeüberwachungseinrichtung verhindert die Blockierung des Busses 1 durch einen ausgefallenen Teilnehmer. Darüber hinaus bietet der Baustein 10 über seinen Modulator und Demodulator die Möglichkeit, den seriellen Kanal zu modulieren, was die Erzeugung eines seriellen Bussi-gnals ohne Gleichspannungskomponente und da-mit eine Transformatorkopplung ermöglicht.

Die Bus-Schnittstelle 9 ist unter Bereitstellung einer externen Bus-Versorgungsspannung galvanisch getrennt aufgebaut. Durch einen einfach externen Analogteil an der Bus-Schnittstelle 9 kann eine transformatorische Entkopplung der Bus-Teil-nehmer erreicht werden.

## Ansprüche

1. Anordnung zum Verbinden einer Verarbeitungseinheit mit einem Bus über eine Schnittstelle, **dadurch gekennzeichnet,** daß die Schnittstelle als Schnittstellenmodul (4) ausgebildet, einen Mikroprozessor (5), eine Busschnittstelle (9) zum Anschluß an einen Bus (1) und eine HOST-Schnittstelle (3) zur Verbindung mit der Verarbeitungseinheit (2) aufweist, daß für den Betrieb des Mikroprozessors (5) ein Programm vorgesehen ist, das einen Datenaustausch zwischen dem Bus (1) und dem Schnittstellenmodul (4) sowie der Verarbeitungseinheit (2) ermöglicht.

2. Schnittstellenmodul nach Anspruch 1, **da-durch gekennzeichnet,** daß das Schnittstellenmo-dul (4) als steckbare Einheit ausgeführt ist.

3. Schnittstellenmodul nach Anspruch 1 oder 2, **dadurch gekennzeichnet,** daß die HOST-Schnittstelle (3) des Schnittstellenmoduls (4) eine Parallelschnittstelle (14) ist, und daß auf dem Schnittstellenmodul (4) ein parametrierbarer, erster anwenderspezifischer Schaltkreis (8) vorgesehen ist, der die Anpassung des Datenaustauschs zwischen dem Mikrozessor (5) und dem HOST-Mikroprozessor (6) der Verarbeitungseinheit (2) an das Schreib-Lese-Verhalten des letzteren vornimmt.

4. Schnittstellenmodul nach Anspruch 3, **dadurch gekennzeichnet,** daß der anwenderspezifische Schaltkreis (8) mehrere Betriebsmodi bereitstellt.

5. Schnittstellenmodul nach Anspruch 3, **dadurch gekennzeichnet,** daß die Parametrierung der HOST-Schnittstelle (3) über Eingabe eines ersten Codes in das Programm des Mikroprozessors (5) erfolgt.

6. Schnittstellenmodul nach einem der vorhergehenden Ansprüche, **dadurch gekennzeichnet,** daß die HOST-Schnittstelle (3) seriell (13) ist.

7. Schnittstellenmodul nach einem der vorhergehenden Ansprüche, **dadurch gekennzeichnet,** daß die HOST-Schnittstelle (3) sowohl einen seriellen (13) als auch einen parallelen (14) Übergabeteil aufweist.

8. Schnittstellenmodul nach einem der vorhergehenden Ansprüche, **dadurch gekennzeichnet,** daß über die Eingabe eines zweiten Codes in das Programm des Mikroprozessors (5) der Datenaustausch zwischen diesem und dem Bus (1), der mit verschiedenen Busprotokollen betrieben ist, anpaßbar ist.

9. Schnittstellenmodul nach einem der vorhergehenden Ansprüche, **dadurch gekennzeichnet,** daß ein anwenderspezifischer Schaltkreis (10) vorgesehen ist, über den der modulierte oder nicht modulierte Betrieb der seriellen Bus-Schnittstelle (9) parametrierbar ist.

10. Schnittstellenmodul nach einem der vorhergehenden Ansprüche, **dadurch gekennzeichnet,** daß die serielle Bus-Schnittstelle (9) des Schnittstellenmoduls (4) ein-oder zweikanalig ist.

11. Schnittstellenmodul nach Anspruch 8 oder 9, **dadurch gekennzeichnet,** daß der anwenderspezifische Schaltkreis (10) als protokollunterstützendes Element eine Sendeüberwachung enthält.

12. Schnittstellenmodul nach einem der vorhergehenden Ansprüche, **dadurch gekennzeichnet,** daß die serielle Bus-Schnittstelle (9) durch Optokoppler (11) und durch Bereitstellung einer externen Schnittstellenspannung (5V) vom Mikroprozessor (5) und von der Verarbeitungseinheit (2) galvanisch getrennt ist.